# EUROPEAN PATENT APPLICATION

(11) **EP 4 227 591 A1**
(43) Date of publication of application: **16.08.2023**
(21) Application number: 21893451.1
(22) Date of filing: 30.07.2021
(51) Int. Cl.: F24F 8/80, F24F 8/95, F24F 11/54, F24F 110/22

(54) **AIR PURIFICATION METHOD, AIR PURIFYING DEVICE, AND STORAGE MEDIUM**

(30) Priority: 19.11.2020 CN 202011305781
(71) Applicant: GD Midea Air-Conditioning Equipment Co., Ltd., Foshan, Guangdong 528311 (CN); Midea Group Co., Ltd., Foshan, Guangdong 528311 (CN)
(72) Inventor: LIN, Yong, Foshan, Guangdong 528311 (CN); LUO, Biao, Foshan, Guangdong 528311 (CN)
(74) Representative: RGTH
(86) International application number: PCT/CN2021/109733
(87) International publication number: WO 2022/105299

(57) **Abstract**

An air purification method, an air purification device (500), and a storage medium are disclosed. A formaldehyde concentration value and a first humidity value of the space where the air purifying device is located are acquired, and a second humidity value outside the space where the air purifying device is located is acquired, then the first humidity value is compared with the second humidity value, and the air purifying device (500) is controlled according to a comparison result and the formaldehyde concentration value to perform air purification. On the basis that air purification is performed on the basis of the formaldehyde concentration value, the air purifying device (500) is controlled according to the comparison result of the first humidity value and the second humidity value to perform air purification, so as to reduce the influence of humidity on the accuracy of the acquired formaldehyde concentration value, and thus, the accuracy of formaldehyde concentration detection can be improved, and an air purification effect is improved.

## Description

### CROSS-REFERENCE TO RELATED APPLICATION

This application claims the priority to Chinese Patent Application No. 202011305781.7 filed on November 19, 2020 and entitled "AIR PURIFICATION METHOD, AIR PURIFICATION DEVICE AND STORAGE MEDIUM", the disclosure of which is incorporated herein by reference in its entirety.

### TECHNICAL FIELD

The present disclosure relates to the technical field of air purification, and in particular to an air purification method, an air purification device and a storage medium.

### BACKGROUND

With the improvement of living standards and the development of science and technology, people are increasingly concerned about indoor air quality, and the utilization rate of air purification devices is also becoming higher. Particularly, formaldehyde is one of the common indoor air pollutants that seriously endangers people's health. When an existing air purification device performs indoor formaldehyde purification, a formaldehyde sensor is used to sense the indoor formaldehyde concentration, and when the formaldehyde concentration exceeds a certain value, fresh air is introduced to achieve the effect of air purification. However, the accuracy of the formaldehyde sensor can be affected by humidity, and the current way of directly introducing fresh air for air purification does not consider the influence of humidity on the accuracy of the formaldehyde sensor, which results in a decrease in the accuracy of formaldehyde concentration detection by the air purification device.

### SUMMARY

The following is a summary of the subject matters described in detail herein. This summary is not intended to limit the scope of protection of the claims.

Embodiments of the present disclosure provide an air purification method, an air purification device and a storage medium which can improve the accuracy of formaldehyde concentration detection.

In accordance with a first aspect of the present disclosure, an embodiment provides an air purification method, which is appliable to an air purification device. The air purification method includes:
acquiring a formaldehyde concentration value and a first humidity value in a space where the air purification device is located;
acquiring a second humidity value outside the space where the air purification device is located; and
comparing the first humidity value with the second humidity value, and controlling the air purification device to perform air purification according to a comparison result and the formaldehyde concentration value.

The air purification method provided by the embodiment of the present disclosure has at least the following beneficial effects: by acquiring the formaldehyde concentration value and the first humidity value in the space where the air purification device is located, acquiring the second humidity value outside the space where the air purification device is located, and then comparing the first humidity value with the second humidity value and controlling the air purification device to perform air purification according to the comparison result and the formaldehyde concentration value, on the basis of air purification based on the formaldehyde concentration value, the air purification device is controlled to perform air purification according to the comparison result of the first humidity value and the second humidity value, so as to reduce the influence of humidity on the accuracy of the acquired formaldehyde concentration value, thereby improving the accuracy of formaldehyde concentration detection and improving the air purification effect.

In some embodiments of the present disclosure, controlling the air purification device to perform air purification according to a comparison result and the formaldehyde concentration value includes:
controlling the air purification device to exhaust air, in response to the formaldehyde concentration value being greater than a preset concentration threshold and the first humidity value being greater than the second humidity value.

In the above technical scheme, when the formaldehyde concentration value is greater than the preset concentration threshold, it means that the space where the air purification device is located is seriously polluted by formaldehyde, and air purification is necessary. The comparative information of the first humidity value and the second humidity value is also used for determination. When the first humidity value is greater than the second humidity value, it is indicated that the humidity in the space where the air purification device is located is higher than that outside the space where the air purification device is located. In this case, the air purification device is controlled to exhaust air, that is, the air purification device performs air purification through air exhausting, which can not only discharge the formaldehyde in the space where the air purification device is located and reduce the formaldehyde concentration value in the space where the air purification device is located, but also avoid introducing external air with low humidity, so as to reduce the influence of humidity on the accuracy of the acquired formaldehyde concentration value, thus improving the accuracy of formaldehyde concentration detection.

In some embodiments of the present disclosure, controlling the air purification device to perform air purification according to a comparison result and the formaldehyde concentration value includes:
controlling the air purification device to exhaust air, in response to the formaldehyde concentration value being greater than a preset concentration threshold, the first humidity value being greater than the second humidity value, and a difference between the first humidity value and the second humidity value being greater than a preset humidity threshold.

In the above technical scheme, on the basis that the first humidity value is greater than the second humidity value, the humidity threshold is further introduced, and in response to the difference between the first humidity value and the second humidity value being greater than the preset humidity threshold, the air purification device is controlled to exhaust air, which can improve the control fineness of the air purification device and the purification effect of the air purification device.

In some embodiments of the present disclosure, controlling the air purification device to perform air purification according to a comparison result and the formaldehyde concentration value includes:
in response to the formaldehyde concentration value being less than the preset concentration threshold, controlling the air purification device to introduce fresh air, and adjusting the flow rate of the fresh air introduced by the air purification device according to the comparison result.

In the above technical scheme, when the formaldehyde concentration value is less than the concentration threshold, it means that formaldehyde pollution in the space where the air purification device is located is not serious. In this case, the air purification device can be controlled to introduce fresh air to improve the air quality in the space where the air purification device is located. At the same time, the flow rate of the fresh air introduced by the air purification device is adjusted according to the comparison result of the first humidity value and the second humidity value, so as to prevent the introduced air from causing a sharp decrease in the humidity in the space where the air purification device is located, thus reducing the influence on the accuracy of the acquired formaldehyde concentration value.

In some embodiments of the present disclosure, adjusting the flow rate of the fresh air introduced by the air purification device according to the comparison result includes:
adjusting the flow rate of the fresh air introduced by the air purification device according to the comparison result and a preset flow rate threshold.

In the above technical scheme, the flow rate of the fresh air introduced by the air purification device is adjusted according to the additional flow rate threshold, which can improve the fineness of adjustment of the flow rate of the fresh air introduced by the air purification device, so as to more accurately prevent the introduced air from causing a sharp decrease in the humidity in the space where the air purification device is located, thus reducing the influence on the accuracy of the acquired formaldehyde concentration value.

In some embodiments of the present disclosure, adjusting the flow rate of the fresh air introduced by the air purification device according to the comparison result and a preset flow rate threshold includes:
adjusting the flow rate of the fresh air introduced by the air purification device such that the flow rate is lower than the preset flow rate threshold in response to the first humidity value being greater than the second humidity value.

In the above technical scheme, in response to the first humidity value being greater than the second humidity value, the flow rate of the fresh air introduced by the air purification device is adjusted to be lower than the preset flow rate threshold, such that the flow rate of the fresh air introduced by the air purification device is not too high, so as to prevent the introduced air from causing a sharp decrease in the humidity in the space where the air purification device is located, thus reducing the influence on the accuracy of the acquired formaldehyde concentration value.

In accordance with a second aspect of the present disclosure, an embodiment provides an air purification device, including:
a formaldehyde concentration sensing apparatus for acquiring a formaldehyde concentration value in a space where an air purification device is located;
a first humidity sensing apparatus for acquiring a first humidity value in the space where the air purification device is located;
a second humidity sensing apparatus for acquiring a second humidity value outside the space where the air purification device is located;
a controller for comparing the first humidity value with the second humidity value, and controlling the air purification device to perform air purification according to a comparison result and the formaldehyde concentration value, where
the controller is connected to the formaldehyde concentration sensing apparatus, to the first humidity sensing apparatus and to the second humidity sensing apparatus respectively.

The air purification device provided by the embodiment of the present disclosure has at least the following beneficial effects: by acquiring the formaldehyde concentration value in the space where the air purification device is located with the formaldehyde concentration sensing apparatus, acquiring the first humidity value in the space where the air purification device is located with the first humidity sensing apparatus, acquiring the second humidity value outside the space where the air purification device is located with the second humidity sensing apparatus, and then comparing the first humidity value with the second humidity value with the controller and controlling the air purification device to perform air purification according to the comparison result and the formaldehyde concentration value, on the basis of air purification based on the formaldehyde concentration value, the air purification device is controlled to perform air purification according to the comparison result of the first humidity value and the second humidity value, so as to reduce the influence of humidity on the accuracy of the acquired formaldehyde concentration value, thereby improving the accuracy of formaldehyde concentration detection and improving the air purification effect.

In some embodiments of the present disclosure, the air purification device includes an air return port, and the formaldehyde concentration sensing apparatus is arranged at the air return port.

In the above technical scheme, the formaldehyde concentration sensing apparatus is arranged at the air return port, such that airflow can be diffused around the formaldehyde concentration sensing apparatus, which can improve the accuracy of formaldehyde concentration detection by the formaldehyde concentration sensing apparatus.

In some embodiments of the present disclosure, the air purification device further includes a fresh air port, the first humidity sensing device is arranged at the air return port, and the second humidity sensing device is arranged at the fresh air port.

In the above technical scheme, the first humidity sensing apparatus is arranged at the air return port and the second humidity sensing apparatus is arranged at the fresh air port, such that airflow can be diffused around the first humidity sensing apparatus and the second humidity sensing apparatus, which can improve the accuracy of humidity detection by the first humidity sensing apparatus and the second humidity sensing apparatus.

In some embodiments of the present disclosure, the air purification device is an air conditioner.

In accordance with a third aspect of the present disclosure, an embodiment further provides a user equipment, including:
at least one processor and a memory configured to be communicatively connected to the at least one processor, where the memory stores an instruction executable by the at least one processor, and the instruction is executed by the at least one processor to enable the at least one processor to perform the air purification method of the second aspect.

In accordance with a fourth aspect of the present disclosure, an embodiment further provides a computer-readable storage medium storing a computer-executable instruction configured to cause a computer to perform an air purification method of the second aspect.

Additional features and advantages of the present disclosure will be set forth in the subsequent description, and in part will become apparent from the description, or may be learned by practice of the present disclosure. The purposes and other advantages of the present disclosure can be realized and obtained by structures specified in the description, the claims and the accompanying drawings.

### BRIEF DESCRIPTION OF DRAWINGS

The accompanying drawings are used to provide a understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
Fig. 1 is a schematic diagram of an air purification device provided by an embodiment of the present disclosure;
Fig. 2 is a flowchart of an air purification method provided by an embodiment of the present disclosure;
Fig. 3 is a flowchart showing steps of controlling the air purification device to perform air purification according to the comparison result and the formaldehyde concentration value according to an embodiment of the present disclosure;
Fig. 4 is a flowchart of a practical example of an air purification method provided by an embodiment of the present disclosure; and
Fig. 5 is another schematic diagram of an air purification device provided by an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the specific embodiments described herein are only intended to explain the present disclosure and are not intended to limit the present disclosure.

It should be known that, in the description of the embodiments of the present disclosure, "a plurality of (or multiple)" means two or more; "greater than", "less than", "over", etc. are to be interpreted as excluding a given numeric; and "above", "below", "within", etc. are to be interpreted as including the given numeric. If "first" and "second", etc. are referred to, it is only for the purpose of distinguishing technical features, and shall not be understood as indicating or implying relative importance or implying the number of the indicated technical features or implying the sequence of the indicated technical features.

Formaldehyde is a common toxic gas. Boards, paint, carpets and wallpaper commonly used in interior decoration often contain and release formaldehyde. Long-term exposure to formaldehyde may cause adverse effects on human health. With the improvement of living standards and the development of science and technology, people are increasingly concerned about indoor air quality, and the utilization rate of air purification devices also is also becoming higher. Particularly, as one of the common indoor air pollutants, formaldehyde seriously harms people's health. When an existing air purification device performs indoor formaldehyde purification, a formaldehyde sensor is used to sense the indoor formaldehyde concentration, and when the formaldehyde concentration exceeds a certain value, fresh air is introduced to achieve the effect of air purification. However, the accuracy of the formaldehyde sensor can be affected by humidity, and the current way of directly introducing fresh air for air purification does not consider the influence of humidity on the accuracy of the formaldehyde sensor, which results in a decrease in the accuracy of formaldehyde concentration detection by the air purification device.

When humidity drops, the detection output of the formaldehyde sensor may have a sudden jump, resulting in a high formaldehyde concentration detection result, thus causing false detection. In this case, the air purification device still performs air purification, resulting in unnecessary energy waste. Moreover, when the outdoor air humidity is low, performing air purification by introducing fresh air will affect the indoor comfort level, and also affect the humidification effect of indoor humidifiers.

In view of this, embodiments of the present disclosure provide an air purification method, an air purification device and a storage medium which can improve the accuracy of formaldehyde concentration detection.

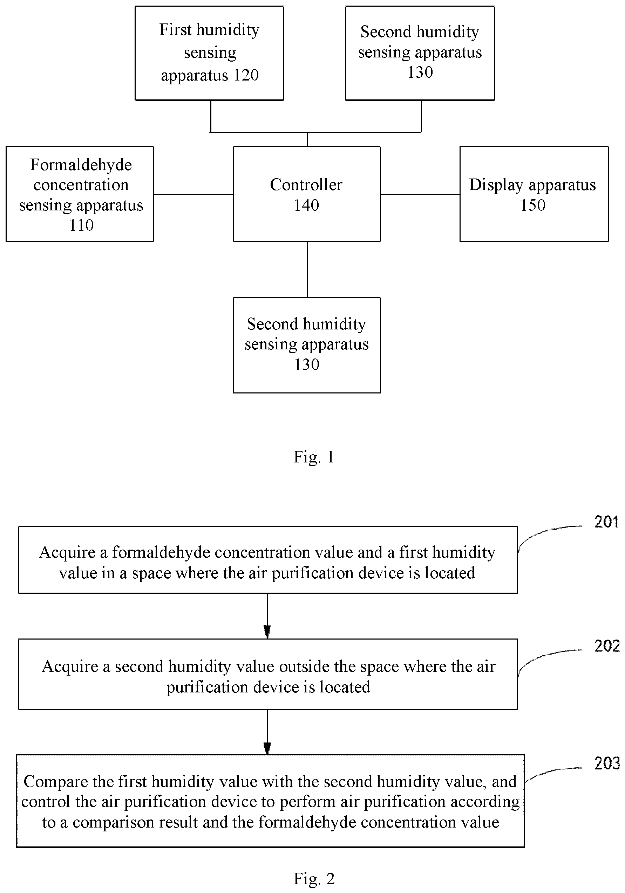

Referring to Fig. 1, which is a schematic diagram of an air purification device provided by an embodiment of the present disclosure, the air purification device includes:
a formaldehyde concentration sensing apparatus 110 for acquiring a formaldehyde concentration value in the space where the air purification device is located;
a first humidity sensing apparatus 120 for acquiring a first humidity value in the space where the air purification device is located;
a second humidity sensing apparatus 130 for acquiring a second humidity value outside the space where the air purification device is located;
a controller 140 for comparing the first humidity value with the second humidity value, and controlling the air purification device to perform air purification according to a comparison result and the formaldehyde concentration value, where
the controller 140 is connected to the formaldehyde concentration sensing apparatus 110, the first humidity sensing apparatus 120 and the second humidity sensing apparatus 130 separately.

In some embodiments, the space where the air purification device is located is a target area where the air purification device performs air purification, which can be a bedroom, a living room, a kitchen, etc., or a hotel lobby, an office, etc. An area outside the space where the air purification device is located can be an outdoor environment or another space other than the space where the air purification device is located. For example, the space where the air purification device is located is a bedroom, and the area outside the space where the air purification device is located can be a living room. Of course, the above scenario is only a schematic illustration, and the embodiment of the present disclosure does not limit the specific scenarios.

It can be understood that the formaldehyde concentration sensing apparatus 110 can be a formaldehyde sensor, and the formaldehyde sensor may be one of a formaldehyde oxide gas sensor, a formaldehyde gas molecular sieve sensor, a formaldehyde surface acoustic wave gas sensor, a visible fluorescent formaldehyde sensor and a formaldehyde gas electronic nose, or other sensors with similar functions, which is not limited by the embodiments of the present disclosure.

It can be understood that the first humidity sensing apparatus 120 and the second humidity sensor can each be one of a lithium chloride hygrometer, a carbon humidity sensor, an alumina hygrometer and a ceramic humidity sensor, or other sensors with similar functions, which is not limited by the embodiments of the present disclosure.

According to the air purification device provided by the embodiment of the present disclosure, by acquiring the formaldehyde concentration value in the space where the air purification device is located with the formaldehyde concentration sensing apparatus 110, acquiring the first humidity value in the space where the air purification device is located with the first humidity sensing apparatus 120, acquiring the second humidity value outside the space where the air purification device is located with the second humidity sensing apparatus 130, and then comparing the first humidity value with the second humidity value with the controller 140 and controlling the air purification device to perform air purification according to the comparison result and the formaldehyde concentration value, on the basis of air purification based on the formaldehyde concentration value, the air purification device is controlled to perform air purification according to the comparison result of the first humidity value and the second humidity value, so as to reduce the influence of humidity on the accuracy of the acquired formaldehyde concentration value, thereby improving the accuracy of formaldehyde concentration detection and improving the air purification effect.

It can be understood that the air purification device includes an air return port, where the air return port allows air in the space where the air purification device is located to enter, and the formaldehyde concentration sensing apparatus 110 is arranged at the air return port. Here, the formaldehyde concentration sensing apparatus 110 is arranged at the air return port, such that airflow can be diffused around the formaldehyde concentration sensing apparatus 110, which can improve the accuracy of formaldehyde concentration detection by the formaldehyde concentration sensing apparatus 110.

It can be understood that the air purification device further includes a fresh air port, where the fresh air port allows air outside the space where the air purification device is located to enter, the first humidity sensing apparatus 120 is arranged at the air return port, and the second humidity sensing apparatus 130 is arranged at the fresh air port. Here, the first humidity sensing apparatus 120 is arranged at the air return port and the second humidity sensing apparatus 130 is arranged at the fresh air port, such that airflow can be diffused around the first humidity sensing apparatus 120 and the second humidity sensing apparatus 130, which can improve the accuracy of humidity detection by the first humidity sensing apparatus 120 and the second humidity sensing apparatus 130.

It can be understood that the air purification device further includes a display apparatus 150, and the display apparatus 150 is connected to the controller 140. The display apparatus 150 can be used for displaying the real-time formaldehyde concentration in the space where the air purification device is located, the humidity inside and outside the space where the air purification device is located, etc., such that users can know the current air condition in real time, and the intelligence level of the air purification device is improved. In some embodiments, the current air condition may be displayed by numbers, or by color grades or specific icons, which is not limited by the embodiments of the present disclosure.

It can be understood that the air purification device further includes an air exchange apparatus 160 for performing air exchange in the space where the air purification device is located, such as exhausting air or introducing fresh air.

It can be understood that the controller 140 is configured to:
control the air purification device to exhaust air in response to the formaldehyde concentration value being greater than a preset concentration threshold and the first humidity value being greater than the second humidity value.

Here, when the air purification device is in an air exhausting state, that is, the air purification device drives the air in the space where the air purification device is located to be exhausted to the outside, thus achieving the effect of air purification. Correspondingly, the air exchange apparatus 160 may include a fan and an exhaust duct, and the exhaust duct communicates with the area outside the space where the air purification device is located, for example, an outdoor environment.

Here, when the formaldehyde concentration value is greater than the preset concentration threshold, it means that the space where the air purification device is located is seriously polluted by formaldehyde, and air purification is necessary. The comparative information of the first humidity value and the second humidity value is also used for determination. When the first humidity value is greater than the second humidity value, it is indicated that the humidity in the space where the air purification device is located is higher than that outside the space where the air purification device is located. In this case, the air purification device is controlled to exhaust air, that is, the air purification device performs air purification through air exhausting, which can not only discharge the formaldehyde in the space where the air purification device is located and reduce the formaldehyde concentration value in the space where the air purification device is located, but also avoid introducing external air with low humidity, so as to reduce the influence of humidity on the accuracy of the acquired formaldehyde concentration value, thus improving the accuracy of formaldehyde concentration detection.

It can be understood that the preset concentration threshold can be set according to the actual situation, and is not limited by the embodiments of the present disclosure.

On this basis, the controller 140 is further configured to:
control the air purification device to exhaust air in response to the formaldehyde concentration value being greater than a preset concentration threshold, the first humidity value being greater than the second humidity value, and the difference between the first humidity value and the second humidity value being greater than a preset humidity threshold.

Here, on the basis that the first humidity value is greater than the second humidity value, the humidity threshold is further introduced, and in response to the difference between the first humidity value and the second humidity value being greater than the preset humidity threshold, the air purification device is controlled to exhaust air, which can improve the control fineness of the air purification device and the purification effect of the air purification device.

For example, when the first humidity value is greater than the second humidity value and the difference between the first humidity value and the second humidity value is small, if fresh air is introduced, the influence on the humidity of the space where the air purification device is located is small and negligible, and the working state of the air purification device can be left unchanged in this case.

It can be understood that the preset humidity threshold can be set according to the actual situation, and is not limited by the embodiments of the present disclosure.

It can be understood that the controller 140 is further configured to:
in response to the formaldehyde concentration value being less than a preset concentration threshold, control the air purification device to introduce fresh air, and adjust the flow rate of the fresh air introduced by the air purification device according to the comparison result.

Here, when the air purification device is in a fresh air state, the air purification device introduces the air outside the space where the air purification device is located into the space where the air purification device is located, so as to achieve the effect of air purification. Correspondingly, the air exchange apparatus 160 may include a fan and a fresh air duct, and the fresh air duct communicates with the area outside the space where the air purification device is located, for example, an outdoor environment.

Here, when the formaldehyde concentration value is less than the concentration threshold, it means that formaldehyde pollution in the space where the air purification device is located is not serious. In this case, the air purification device can be controlled to introduce fresh air to improve the air quality in the space where the air purification device is located. At the same time, the flow rate of the fresh air introduced by the air purification device is adjusted according to the comparison result of the first humidity value and the second humidity value, so as to prevent the introduced air from causing a sharp decrease in the humidity in the space where the air purification device is located, thus reducing the influence on the accuracy of the acquired formaldehyde concentration value.

On this basis, the controller 140 is further configured to:
adjust the flow rate of the fresh air introduced by the air purification device according to the comparison result and a preset flow rate threshold.

Here, the flow rate of the fresh air introduced by the air purification device is adjusted according to the additional flow rate threshold, which can improve the fineness of adjustment of the flow rate of the fresh air introduced by the air purification device, so as to more accurately prevent the introduced air from causing a sharp decrease in the humidity in the space where the air purification device is located, thus reducing the influence on the accuracy of the acquired formaldehyde concentration value.

It can be understood that the preset flow rate threshold can be set according to the actual situation, and is not limited by the embodiments of the present disclosure.

On this basis, the controller 140 is further configured to:
adjust the flow rate of the fresh air introduced by the air purification device such that the flow rate is lower than the preset flow rate threshold, in response to the first humidity value being greater than the second humidity value.

Here, in response to the first humidity value being greater than the second humidity value, the flow rate of the fresh air introduced by the air purification device is adjusted to be lower than the preset flow rate threshold, such that the flow rate of the fresh air introduced by the air purification device is not too high, so as to prevent the introduced air from causing a sharp decrease in the humidity in the space where the air purification device is located, thus reducing the influence on the accuracy of the acquired formaldehyde concentration value.

Referring to Fig. 2, an embodiment of the present disclosure also provides an air purification method, which is appliable to the air purification device in the above embodiments. The air purification method includes but is not limited to the following steps 201 to 203.

At step 201, a formaldehyde concentration value and a first humidity value in the space where the air purification device is located is acquired.

At step 202, a second humidity value outside the space where the air purification device is located is acquired.

At step 203, the first humidity value is compared with the second humidity value, and the air purification device is controlled to perform air purification according to a comparison result and the formaldehyde concentration value.

Here, according to the above steps 201 to 203, by acquiring the formaldehyde concentration value and the first humidity value in the space where the air purification device is located, acquiring the second humidity value outside the space where the air purification device is located, and then comparing the first humidity value with the second humidity value and controlling the air purification device to perform air purification according to the comparison result and the formaldehyde concentration value, on the basis of air purification based on the formaldehyde concentration value, the air purification device is controlled to perform air purification according to the comparison result of the first humidity value and the second humidity value, so as to reduce the influence of humidity on the accuracy of the acquired formaldehyde concentration value, thereby improving the accuracy of formaldehyde concentration detection and improving the air purification effect.

It can be understood that in the above step 203, controlling the air purification device to perform air purification according to a comparison result and the formaldehyde concentration value may include:
controlling the air purification device to exhaust air in response to the formaldehyde concentration value being greater than a preset concentration threshold and the first humidity value being greater than the second humidity value.

Here, when the formaldehyde concentration value is greater than the preset concentration threshold, it means that the space where the air purification device is located is seriously polluted by formaldehyde, and air purification is necessary. The comparative information of the first humidity value and the second humidity value is also used for determination. When the first humidity value is greater than the second humidity value, it is indicated that the humidity in the space where the air purification device is located is higher than that outside the space where the air purification device is located. In this case, the air purification device is controlled to exhaust air, that is, the air purification device performs air purification through air exhausting, which can not only discharge the formaldehyde in the space where the air purification device is located and reduce the formaldehyde concentration value in the space where the air purification device is located, but also avoid introducing external air with low humidity, so as to reduce the influence of humidity on the accuracy of the acquired formaldehyde concentration value, thus improving the accuracy of formaldehyde concentration detection.

It can be understood that the preset concentration threshold can be set according to the actual situation, and is not limited by the embodiments of the present disclosure.

It can be understood that in the above step 203, controlling the air purification device to perform air purification according to a comparison result and the formaldehyde concentration value may include:
controlling the air purification device to exhaust air in response to the formaldehyde concentration value being greater than a preset concentration threshold, the first humidity value being greater than the second humidity value, and the difference between the first humidity value and the second humidity value being greater than a preset humidity threshold.

Here, on the basis that the first humidity value is greater than the second humidity value, the humidity threshold is further introduced, and in response to the difference between the first humidity value and the second humidity value being greater than the preset humidity threshold, the air purification device is controlled to exhaust air, which can improve the control fineness of the air purification device and the purification effect of the air purification device.

For example, when the first humidity value is greater than the second humidity value and the difference between the first humidity value and the second humidity value is small, if fresh air is introduced, the influence on the humidity of the space where the air purification device is located is small and negligible, and the working state of the air purification device can be left unchanged in this case.

It can be understood that the preset humidity threshold can be set according to the actual situation, and is not limited by the embodiments of the present disclosure.

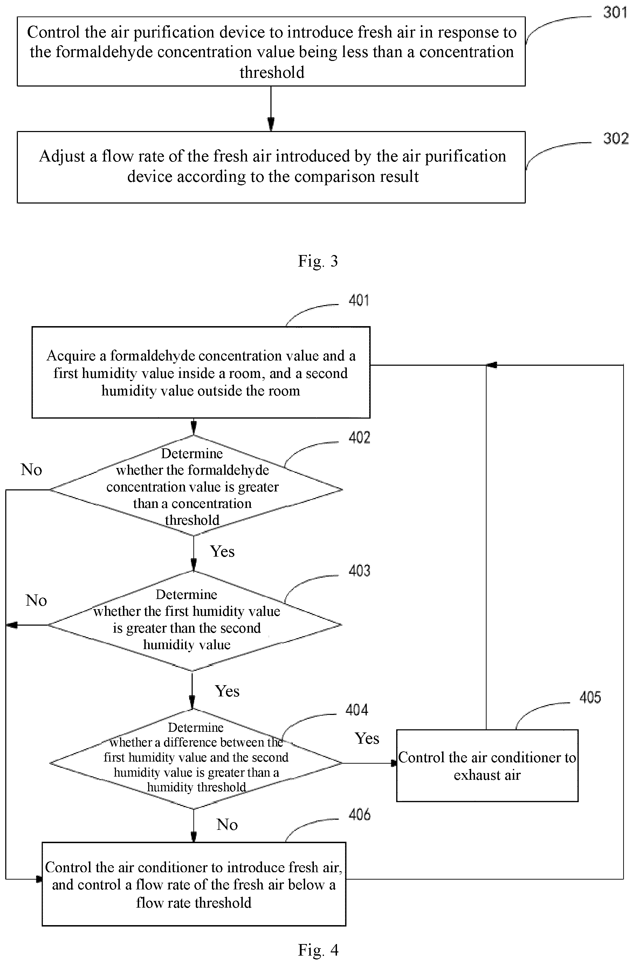

It can be understood that, referring to Fig. 3, in the above step 203, controlling the air purification device to perform air purification according to a comparison result and the formaldehyde concentration value may include the following steps 301 to 302.

At step 301, in response to the formaldehyde concentration value being less than the concentration threshold, the air purification device is controlled to introduce fresh air.

At step 302, the flow rate of the fresh air introduced by the air purification device is adjusted according to the comparison result.

Here, when the formaldehyde concentration value is less than the concentration threshold, it means that formaldehyde pollution in the space where the air purification device is located is not serious. In this case, the air purification device can be controlled to introduce fresh air to improve the air quality in the space where the air purification device is located. At the same time, the flow rate of the fresh air introduced by the air purification device is adjusted according to the comparison result of the first humidity value and the second humidity value, so as to prevent the introduced air from causing a sharp decrease in the humidity in the space where the air purification device is located, thus reducing the influence on the accuracy of the acquired formaldehyde concentration value.

It can be understood that in the above step 302, adjusting the flow rate of the fresh air introduced by the air purification device according to the comparison result includes: adjusting the flow rate of the fresh air introduced by the air purification device according to the comparison result and a preset flow rate threshold.

Here, the flow rate of the fresh air introduced by the air purification device is adjusted according to the additional flow rate threshold, which can improve the fineness of adjustment of the flow rate of the fresh air introduced by the air purification device, so as to more accurately prevent the introduced air from causing a sharp decrease in the humidity in the space where the air purification device is located, thus reducing the influence on the accuracy of the acquired formaldehyde concentration value.

It can be understood that the preset flow rate threshold can be set according to the actual situation, and is not limited by the embodiments of the present disclosure.

It can be understood that, adjusting the flow rate of the fresh air introduced by the air purification device according to the comparison result and a preset flow rate threshold includes:
adjusting the flow rate of the fresh air introduced by the air purification device such that the flow rate is lower than the preset flow rate threshold in response to the first humidity value being greater than the second humidity value.

Here, in response to the first humidity value being greater than the second humidity value, the flow rate of the fresh air introduced by the air purification device is adjusted to be lower than the preset flow rate threshold, such that the flow rate of the fresh air introduced by the air purification device is not too high, so as to prevent the introduced air from causing a sharp decrease in the humidity in the space where the air purification device is located, thus reducing the influence on the accuracy of the acquired formaldehyde concentration value.

Here, in response to the first humidity value being less than the second humidity value, the flow rate of the fresh air introduced by the air purification device can be adjusted to make the flow rate greater than the preset flow rate threshold. Since the first humidity value is less than the second humidity value in this case, the flow rate of the fresh air can be increased to improve the purification efficiency.

The principle of the air purification method according to the embodiment of the present disclosure will be explained with a practical example.

As an example, the air purification device provided by the embodiment of the present disclosure is an air conditioner with an air purification function. Referring to Fig. 4, the air purification method includes the following steps 401 to 406.

At step 401, a formaldehyde concentration value and a first humidity value inside a room are acquired, and a second humidity value outside the room is acquired.

At step 402, it is determined whether the formaldehyde concentration value is greater than a concentration threshold, if so, the method proceeds to step 403, and otherwise the method proceeds to step 406.

At step 403, it is determined whether the first humidity value is greater than the second humidity value, if so, the method proceeds to step 404, and otherwise the method proceeds to step 406.

At step 404, it is determined whether the difference between the first humidity value and the second humidity value is greater than a humidity threshold, if so, the method proceeds to step 405, and otherwise the method proceeds to step 406.

At step 405, the air conditioner is controlled to exhaust air, and the method proceeds to step 401.

At step 406, the air conditioner is controlled to introduce fresh air, the flow rate is controlled below a flow rate threshold, and the method proceeds to step 401.

For example, the above concentration threshold may be set as 0.8 mg/m³, the humidity threshold may be 10%, and the flow rate threshold may be 300 m³/h. When the formaldehyde concentration value inside the room is 1 g/m³ which exceeds the concentration threshold, it is necessary to compare the first humidity value and the second humidity value; and if the first humidity value inside the room is 60% and the second humidity value outside the room is 40%, the difference therebetween is 20% which is greater than the humidity threshold, and thus the air conditioner exhausts air without introducing outdoor air with low humidity which may affect the accuracy of formaldehyde concentration detection. When the formaldehyde concentration value inside the room returns to 0.5 mg/m³ which is lower than the concentration threshold, the air conditioner introduces fresh air with a volumetric flow rate lower than 300 m³/h, so as to continue to improve the indoor air quality, and avoid a sharp decrease in indoor humidity, thus reducing the influence on the accuracy of the acquired formaldehyde concentration value.

It can be understood that the above numerical values are only schematic and are used to explain the working principle of the embodiments of the present disclosure, and are not limited by the embodiments of the present disclosure.

In the above example, the formaldehyde concentration value and the first humidity value inside the room are acquired, the second humidity value outside the room is acquired, and then the first humidity value and the second humidity value are compared; in response to the difference between the first humidity value and the second humidity value being greater than the humidity threshold, air purification is performed by exhausting air, so as to reduce the influence of humidity on the accuracy of the acquired formaldehyde concentration value, such that the accuracy of formaldehyde concentration detection can be improved; and in response to the formaldehyde concentration value inside the room dropping below the concentration threshold, air purification is performed by introducing fresh air, and the flow rate is controlled to be lower than the flow rate threshold, so as to continue to improve the indoor air quality, and avoid a sharp decrease in indoor humidity, thus reducing the influence on the accuracy of the acquired formaldehyde concentration value. Therefore, the air conditioner has the advantage of a good air purification effect.

It should also be understood that various implementations provided by the embodiments of the present disclosure can be freely combined to achieve different technical effects.

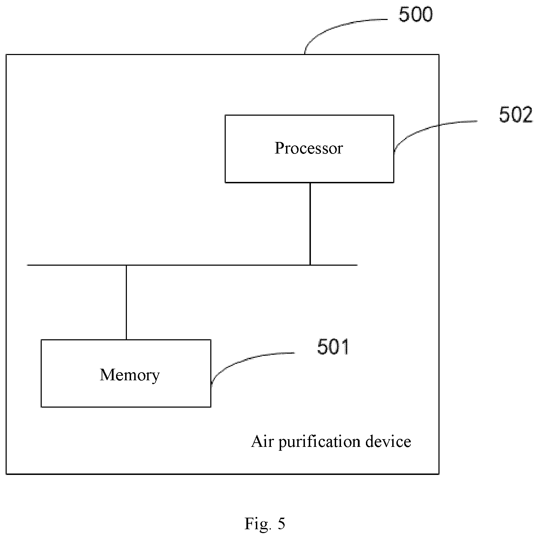

Fig. 5 shows an air purification device 500 provided by an embodiment of the present disclosure. The air purification device 500 includes: a memory 501, a processor 502, and a computer program stored in the memory 501 and executable by the processor 502, where the computer program is configured to, when executed, perform the air purification method described above.

The processor 502 and the memory 501 may be connected by a bus or by other means.

As a non-transitory computer-readable storage medium, the memory 501 may be configured to store a non-transitory software program and a non-transitory computer-executable program, such as the air purification method described in the embodiments of the present disclosure. The processor 502 implements the air purification method described above by executing a non-transitory software program and an instruction stored in the memory 501.

The memory 501 may include a storage program area and a storage data area, where the storage program area may store an operating system and application program(s) required by at least one function, and the storage data area can store data created in the execution of the air purification method described above. In addition, the memory 501 may include a high-speed random access memory 501 and also a non-transitory memory 501, for example, at least one magnetic disk storage device, a flash memory device, or another non-transitory solid-state storage device. In some implementations, the memory 501 may optionally include memories 501 remotely located with respect to the processor 502, and these remote memories 501 may be connected to the air purification device 500 via a network. Examples of the above-mentioned network include the Internet, an intranet, a local area network, a mobile communication network, and a combination thereof.

The non-transitory software program and an instruction required to realize the above air purification method are stored in the memory 501, which, when executed by one or more processors 502, perform the above air purification method, for example, method steps 201 to 203 in Fig. 2, method steps 301 to 302 in Fig. 3, and method steps 401 to 406 in Fig. 4.

An embodiment of the present disclosure provides a computer-readable storage medium storing a computer-executable instruction, where the computer-executable instruction is configured to perform the air purification method described above

In an embodiment, the computer-readable storage medium stores a computer-executable instruction which, when executed by one or more control processors, for example, by a processor 502 in the above air purification device 500, can cause the processor 502 to execute the air purification method, for example, method steps 201 to 203 in Fig. 2, method steps 301 to 302 in Fig. 3 and method steps 401 to 406 in Fig. 4.

The apparatus embodiments described above are only for illustration. The units described as separate components may or may not be physically separated, that is, they may be located at one place or distributed to multiple network units. Some or all of the components can be selected according to actual needs to achieve the purpose of this embodiment.

It can be understood by those having ordinary skill in the art that all or some of the steps of the methods and systems disclosed above can be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software can be distributed on computer-readable media, which can include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program components or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skill in the art that communication media typically contain computer-readable instructions, data structures, program components or other data in a modulated data signal such as a carrier wave or other transmission mechanism, and can include any information delivery media.

The above is a detailed description of some implementations of the present disclosure, but the present disclosure is not limited to the above-mentioned embodiments. Those having ordinary skill in the art can also make various equivalent modifications or replacements without departing from the scope of the present disclosure, and these equivalent modifications or replacements are all included in the scope defined by the claims of the present disclosure.

## Claims

1. An air purification method, which is appliable to an air purification device, the air purification method comprising:
acquiring a formaldehyde concentration value and a first humidity value in a space where the air purification device is located;
acquiring a second humidity value outside the space where the air purification device is located; and
comparing the first humidity value with the second humidity value, and controlling the air purification device to perform air purification according to a comparison result and the formaldehyde concentration value.

2. The air purification method of claim 1, wherein controlling the air purification device to perform air purification according to a comparison result and the formaldehyde concentration value comprises:
controlling the air purification device to exhaust air, in response to the formaldehyde concentration value being greater than a preset concentration threshold and the first humidity value being greater than the second humidity value.

3. The air purification method of claim 1, wherein controlling the air purification device to perform air purification according to a comparison result and the formaldehyde concentration value comprises:
controlling the air purification device to exhaust air, in response to the formaldehyde concentration value being greater than a preset concentration threshold, the first humidity value being greater than the second humidity value, and a difference between the first humidity value and the second humidity value being greater than a preset humidity threshold.

4. The air purification method of claim 1, wherein controlling the air purification device to perform air purification according to a comparison result and the formaldehyde concentration value comprises:
controlling the air purification device to introduce fresh air in response to the formaldehyde concentration value being less than a preset concentration threshold; and
adjusting a flow rate of the fresh air introduced by the air purification device according to the comparison result.

5. The air purification method of claim 4, wherein adjusting a flow rate of the fresh air introduced by the air purification device according to the comparison result comprises:
adjusting the flow rate of the fresh air introduced by the air purification device according to the comparison result and a preset flow rate threshold.

6. The air purification method of claim 5, wherein adjusting the flow rate of the fresh air introduced by the air purification device according to the comparison result and a preset flow rate threshold comprises:
adjusting the flow rate of the fresh air introduced by the air purification device such that the flow rate is lower than the preset flow rate threshold, in response to the first humidity value being greater than the second humidity value.

7. An air purification device, comprising:
a formaldehyde concentration sensing apparatus for acquiring a formaldehyde concentration value in a space where an air purification device is located;
a first humidity sensing apparatus for acquiring a first humidity value in the space where the air purification device is located;
a second humidity sensing apparatus for acquiring a second humidity value outside the space where the air purification device is located; and
a controller for comparing the first humidity value with the second humidity value, and controlling the air purification device to perform air purification according to a comparison result and the formaldehyde concentration value,
wherein the controller is connected to the formaldehyde concentration sensing apparatus, to the first humidity sensing apparatus and to the second humidity sensing apparatus respectively.

8. The air purification device of claim 7, further comprising:
an air return port, wherein the formaldehyde concentration sensing apparatus is arranged at the air return port.

9. The air purification device of claim 8, further comprising:
a fresh air port, wherein the first humidity sensing apparatus is arranged at the air return port, and the second humidity sensing apparatus is arranged at the fresh air port.

10. The air purification device of any one of claims 7 to 9, wherein the air purification device is an air conditioner.

11. An air purification device, comprising:
at least one processor; and
a memory configured to be communicatively connected to the at least one processor,
wherein the memory stores an instruction executable by the at least one processor, and the instruction, when executed by the at least one processor, cause the at least one processor to perform an air purification method of any one of claims 1 to 6.

12. A computer-readable storage medium storing a computer-executable instructions, wherein the computer-executable instruction is configured to cause a computer to perform an air purification method of any one of claims 1 to 6.
